# EUROPÄISCHE PATENTANMELDUNG

(11) **EP 2 248 425 A2**
(43) Veröffentlichungstag der Anmeldung: **10.11.2010**
(21) Anmeldenummer: 10161863.5
(22) Anmeldetag: 04.05.2010
(51) Int. Cl.: A21B 1/02, A21B 3/04, A21B 7/00

(54) **Zentral-Versorgungseinrichtung für eine Gruppe von Backöfen sowie Backanlage mit einer derartigen Zentral-Versorgungseinrichtung und mindestens zwei Backöfen**

(30) Priorität: 07.05.2009 DE 102009020204
(71) Anmelder: Werner & Pfleiderer Lebensmitteltechnik GmbH, 91550 Dinkelsbühl (DE)
(72) Erfinder: Dannenhauer, Bernd, 91550, Dinkelsbühl (DE)
(74) Vertreter: Hofmann, Stefan

(57) **Zusammenfassung**

Eine Backanlage (1) hat eine Zentral-Versorgungseinrichtung (2) für eine Gruppe von Backöfen (3, 4). Die Zentral-Versorgungseinrichtung (2) versorgt die Backöfen (3, 4) mit Heizenergie und Schwaden. Sie hat ein Gehäuse (6), eine Heizquelle (7) und eine Dampfquelle (8), die beide in dem Gehäuse (6) untergebracht sind, und Anschlusskomponenten (9, 10) zum Verbinden der Quellen (7, 8) mit den Backöfen (3, 4). Aufgrund der Zentral-Versorgungseinrichtung resultiert eine Backanlage mit einer Energieversorgung für die beteiligten Backöfen, die einen effizienten Energieeinsatz zur Erzeugung von Heizenergie und von Dampf gewährleistet.

## Beschreibung

Die Erfindung betrifft eine Zentral-Versorgungseinrichtung für eine Gruppe von Backöfen. Ferner betrifft die Erfindung eine Backanlage mit einer derartigen Zentral-Versorgungseinrichtung und mindestens zwei Backöfen.

Backöfen mit Heizquellen und/oder Dampfquellen sind in vielfältiger Ausführung bekannt, beispielsweise aus der DE 1 551 962, der DE 195 46 641 A1, der DE 43 33 585 A1, der DE 197 23 407 B4, der DD 251 458 A3, der EP 1 389 425 A2 und der EP 1 197 148 A2.

Der effiziente Einsatz von Energie, die für das Backen insbesondere im gewerblichen Bereich gebraucht wird, stellt eine der Hauptforderungen an die Backtechnik dar. Es ist entsprechend eine Aufgabe der vorliegenden Erfindung, eine Energieversorgung für einen Backofen zu schaffen, die einen effizienten Energieeinsatz zur Erzeugung von Heizenergie und von Dampf gewährleistet.

Diese Aufgabe ist erfindungsgemäß gelöst durch eine Zentral-Versorgungseinrichtung mit den im Anspruch 1 angegebenen Merkmalen.

Das Konzept der erfindungsgemäßen Zentral-Versorgungseinrichtung stellt eine Abkehr von der dezentralen und individuellen Energieversorgung dar, die aus den vorstehend genannten Druckschriften zum Stand der Technik bekannt ist. Die Zentral-Versorgungseinrichtung kann nach Energieeffizienz-Gesichtspunkten optimiert ausgestaltet sein. Diesbezügliche Kompromisse, beispielsweise aufgrund einer wegen der im Stand der Technik erforderlichen Integration in einen Backofen erforderlichen Kompaktheit der Versorgungseinrichtung, müssen nicht eingegangen werden. Mit der Zentral-Versorgungseinrichtung können mehrere Backöfen, beispielsweise zwei, drei, vier, fünf oder auch eine noch größere Anzahl von Backöfen, versorgt werden. Die Dampfquelle kann ihre Heizenergie abgeleitet von der Heizquelle oder auch von einer Heizeinheit erhalten, die unabhängig von der Heizquelle arbeitet.

Eine Versorgung mit Energieträgern nach Anspruch 2 ist flexibel an die jeweiligen Anforderungen, die an eine Backanlage gestellt sind, die mit der Zentral-Versorgungseinrichtung versorgt wird, angepasst. Holz kann als Energieträger beispielsweise in Form von Pellets, Schnitzeln oder in Form von Spaltholz zugeführt werden.

Eine alternative Energieversorgung nach Anspruch 3 ermöglicht einen besonders umweltschonenden Umgang mit Ressourcen. Als alternative Energiequelle kann beispielsweise Biomasse genutzt werden. Auch andere alternative Energiequellen, beispielsweise Solarenergie, die mit anderen Energieträgern kombiniert werden können, sind möglich.

Eine Heiz-Regeleinheit nach Anspruch 4 stellt sicher, dass die Heizquelle nicht unnötig mit zu hoher Leistung betrieben wird. Die Heiz-Regeleinheit kann eine PID-Regelung aufweisen.

Entsprechende Vorteile bietet eine Dampf-Regeleinheit nach Anspruch 5. Soweit eine Heiz- und eine Dampfregeleinheit bei der Zentral-Versorgungseinrichtung zum Einsatz kommen, können diese Regeleinheiten auch untereinander verbunden sein, was weiteres Effizienzpotential bietet.

Die Vorteile einer Backanlage nach Anspruch 6, die die erfindungsgemäße Zentral-Versorgungseinrichtung einsetzt, entsprechen denjenigen, die vorstehend unter Bezugnahme auf die Zentral-Versorgungseinrichtung bereits erläutert wurden. Die Zentral-Versorgungseinrichtung kann zusätzlich zu ihrer Verbindung mit den mindestens zwei Backöfen auch mit einem sonstigen Verbraucher verbunden sein und diesen mit Energie und gegebenenfalls auch mit Dampf versorgen. Ein Beispiel für einen derartigen weiteren Verbraucher ist eine Raumheizung oder ein Warmwasserbehälter.

Eine Beheizung mit Heizgas nach Anspruch 7 stellt eine effiziente Möglichkeit dar, die Backanlage zentral über die Zentral-Versorgungseinrichtung mit Heizenergie zu versorgen.

Für eine direkte Abgas-Heizung nach Anspruch 8 stehen Backöfen, die aus dem Stand der Technik bekannt sind, bereits zur Verfügung. In der einfachsten Variante können diese Öfen dann ohne ihre eigene Energie- und Schwadenversorgung betrieben werden. In einer speziell auf die Zentral-Versorgungseinrichtung angepassten Variante kann der Raum innerhalb der Backöfen, der vorher für die individuelle Heizenergie- und Dampferzeugung gebraucht war, nun auch als Backraum genutzt werden. Es resultiert insgesamt ein leistungsfähigerer Backofen.

Ein Abgas-Wärmetauscher nach Anspruch 9 führt zu einer besonders energieeffizienten Backanlage. Alternativ oder zusätzlich zu einer Verbindung des Abgas-Wärmetauschers mit der Zentral-Versorgungseinrichtung kann der Abgas-Wärmetauscher auch mit einem sonstigen Verbraucher in Verbindung stehen. Der Abgas-Wärmetauscher kann mit der Dampfquelle verbunden sein, beispielsweise mit einem Kaltwasser-Vorlauf oder direkt mit einem Dampfbehälter. Der Abgas-Wärmetauscher kann auch mit der Heizquelle in Verbindung stehen.

Auch mit Umluft beheizte Backöfen zum Einsatz mit einer Backanlage nach Anspruch 10 sind aus dem Stand der Technik bekannt und können dann entweder ohne ihre eigenen Versorgungen betrieben oder mit zusätzlichem Backraum ausgestattet werden. Die Backanlage kann auch kombiniert mit Backöfen betrieben werden, die einerseits direkt mit von der Heizquelle erzeugten Abgasen und andererseits mit über Wärmetauscher erwärmter Umluft beheizt werden.

Eine Einlass-Klappe nach Anspruch 11 ermöglicht eine individuelle Heizversorgung der einzelnen Öfen der Backofengruppe.

Eine digital umstellbare Einlass-Klappe nach Anspruch 12 kann mit einer Steuereinheit betrieben werden, die für Backöfen mit integrierter Versorgung bereits vorhanden ist. Dies erleichtert die Umstellung einer bestehenden Backanlage auf eine Zentralversorgung.

Eine stufenlose Verstellung der Einlass-Klappe nach Anspruch 13 ermöglicht eine feine Regelung der Beheizung des hiermit ausgerüsteten Backofens.

Eine Anordnung nach Anspruch 14 stellt sicher, dass die Heizquelle diejenige Heizenergie erzeugt, die von den Backöfen momentan abgerufen wird.

Eine Anordnung mit einem Schwaden-Wärmetauscher nach Anspruch 15 hat Vorteile, die denjenigen entsprechen, die im Zusammenhang mit dem Abgas-Wärmetauscher bereits erläutert wurden. Auch der Schwaden-Wärmetauscher kann alternativ oder zusätzlich mit einem zusätzlichen Verbraucher in Wärmeverbindung stehen.

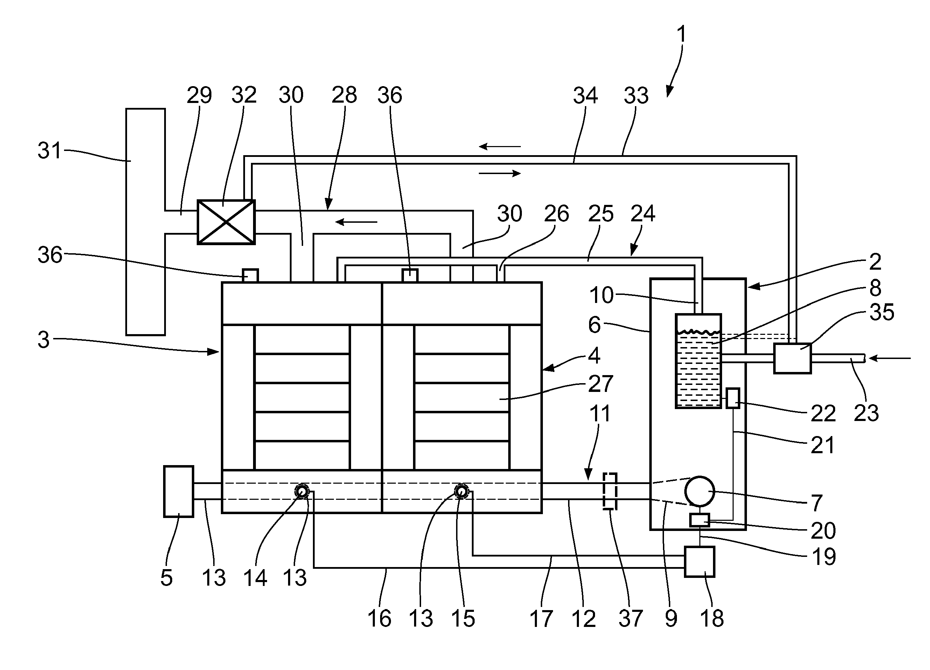

Ein Ausführungsbeispiel der Erfindung wird nachfolgend anhand der Zeichnung näher erläutert. Die einzige Figur zeigt eine Backanlage mit einer Zentral-Versorgungseinrichtung für eine Gruppe von Backöfen und mit zwei Backöfen, die von dieser Versorgungseinrichtung versorgt werden.

Eine Backanlage 1 hat eine Zentral-Versorgungseinrichtung 2 sowie zwei Backöfen 3, 4, die über die Zentral-Versorgungseinrichtung 2 mit Heizenergie und Schwaden versorgt werden. Zusätzlich wird mit Heizenergie ein weiterer bzw. sonstiger Verbraucher 5 über die Zentral-Versorgungseinrichtung 2 versorgt, der in der Figur lediglich schematisch dargestellt ist. Der weitere Verbraucher 5 kann beispielsweise eine Raumheizung darstellen.

Die Zentral-Versorgungseinrichtung 2 hat ein Gehäuse 6, in dem eine Heizquelle 7 und eine Dampfquelle 8 untergebracht sind.

Bei der Heizquelle 7 handelt es sich um einen Brenner, der beispielsweise mit einem fossilen Brennstoff wie Öl, Kohle, Gas oder Holz versorgt wird. Auch eine alternative Heizquelle 7 in Form einer elektrisch betriebenen Heizquelle ist möglich. Die Holzversorgung kann in Form von Pellets, von Holzschnitzeln oder von Spaltholz geschehen. Eine Kohleversorgung kann mit Holzkohle, mit Briketts oder mit Koks erfolgen. Eine Gasversorgung kann mit fossilem Brenngas oder auch mit Biogas geschehen. Auch eine Energieversorgung mit einer alternativen Energiequelle, beispielsweise mit Biomasse, ist möglich.

Die Dampfquelle 8 ist als Dampfkessel ausgeführt. Eine Heizung für die Dampfquelle 8 kann über die Heizquelle 7 erfolgen. Auch eine separate Heizeinheit zur Dampferzeugung ist möglich.

Die Zentral-Versorgungseinrichtung 2 hat weiterhin Anschlusskomponenten 9, 10 in Form von Anschlussstutzen zur Verbindung der Quellen 7, 8 mit den Verbrauchern, also mit den Backöfen 3, 4 und dem sonstigen Verbraucher 5. Neben den Anschlusskomponenten 9, 10 dienen zu dieser Verbindung ein Gasverteilersystem 11 mit einem Hauptrohr 12 und den Backöfen 3, 4 und dem sonstigen Verbraucher 5 zugeordneten Verteilerrohren 13.

Die Verteilerrohre 13 stellen gleichzeitig jeweils einen Heizgas-Einlass zum Einleiten des Heizgases in die Backöfen 3, 4 und in den sonstigen Verbraucher 5 dar. In den Heizgas-Einlässen 13 der Backöfen 3, 4 ist jeweils eine steuerbare Einlass-Klappe 14, 15 angeordnet. Mit den Einlass-Klappen 14, 15 kann jeweils der Querschnitt einer Einlass-Öffnung des Heizgas-Einlasses 13 für den jeweiligen Backofen 3, 4 verändert werden. Die Einlass-Klappen 14, 15 sind digital zwischen einer Offenstellung und einer Verschlussstellung gesteuert umstellbar. Alternativ ist es möglich, Einlassklappen einzusetzen, die stufenlos zwischen einer die Heizgas-Einlässe 13 vollständig oder weitgehend freigebenden und einer die Heizgas-Einlässe 13 vollständig verschließenden Stellung verstellt werden können.

Die Einlass-Klappen 14, 15 stehen über Signalleitungen 16, 17 mit einer Steuereinheit 18 der Zentral-Versorgungseinrichtung 2 in Signalverbindung. Die Steuereinheit 18 ist in der Figur schematisch außerhalb des Gehäuses 6 dargestellt, kann aber genauso auch im Gehäuse 6 untergebracht sein. Über eine weitere Signalleitung 19 steht die Steuereinheit 18 mit einer Heiz-Leistungsregeleinheit 20 der Zentral-Versorgungseinrichtung 2 in Signalverbindung. Letztere hat einen Leistungssensor für die momentane Ist-Leistung der Heizquelle 7 und ein Regelelement, beispielsweise in Form eines Zuführventils für den jeweiligen Energieträger, im vorliegenden Ausführungsbeispiel für Brenngas. In Abhängigkeit von einem vorgegebenen Sollwert für die Heizquellenleistung steuert die Heiz-Leistungsregeleinheit 20 das Regelelement an, bis der Ist-Leistungswert mit dem vorgegebenen Soll-Leistungswert übereinstimmt.

Über eine weitere Signalleitung 21 steht die Heiz-Leistungsregeleinheit 20 mit einer Dampf-Regeleinheit 22 zur Regelung der Leistung der Dampfquelle 8 in Signalverbindung.

Über die Dampf-Leistungsregeleinheit 22 ist eine von der Heizleistung der Heizquelle 7, die zum Beheizen der Backöfen 3, 4 sowie des sonstigen Verbrauchers 5 erforderlich ist, weitgehend unabhängige Regelung der Dampferzeugungsleistung möglich. Auch die Dampf-Leistungsregeleinheit 22 hat einen Leistungssensor, beispielsweise einen am Dampfkessel der Dampfquelle 8 angebrachten Temperatursensor, und ein Regelelement zur Vorgabe einer Dampferzeugungsleistung in Abhängigkeit vom gemessenen Ist-Wert des Sensors und einem Soll-Dampferzeugungsleistungswert. Das Dampf-Regelelement wirkt entweder auf einen Dampf-Heizkreis der Heizquelle 7 ein oder auf eine von der Heizquelle 7 unabhängige Dampf Heizeinheit.

Die Leistungsregeleinheiten 20, 22 können eine PID-Regelung einsetzen.

Der Dampfkessel der Dampfquelle 8 wird über einen Kaltwasseranschluss 23 mit Wasser versorgt. Über die Dampf-Anschlusskomponente 10 und ein Dampfverteilersystem 24 mit einem Dampf-Hauptrohr 25 und Dampf-Verteilerrohren 26 steht die Dampfquelle 8 mit den Backöfen 3, 4 in Verbindung.

Abgesehen davon, dass die Backöfen 3, 4 keine eigene Heizquelle und keine eigene Dampfquelle aufweisen, sind diese aufgebaut wie beispielsweise aus der EP 1 389 425 A2 bekannt. Die Backöfen 3, 4 haben eine Mehrzahl von etagenweise übereinander angeordneten Herden 27. Die Herde 27 werden über vom Heizgas durchströmte Register, die Strahlungswärme an die Herde 27 abgeben, erwärmt. In der Zeichnung ist jeder der Backöfen 3, 4 mit fünf derartigen, übereinander angeordneten Herden 27 dargestellt. Auch eine größere oder kleinere Anzahl derartiger Herde 27 ist möglich. Die Herde 27 werden über das Gasverteilersystem 11 mit Heizgas und über das Dampfverteilersystem 25 mit Dampf bzw. Schwaden versorgt. Die Heizgasversorgung erfolgt gesteuert über die Einlass-Klappen 14. 15. Die Dampfversorgung erfolgt gesteuert über die Dampf-Leistungsregeleinheit 22. Alternativ ist es möglich, auch in den Dampf-Verteilerrohren 26 Dampfventile oder Einlass-Klappen anzuordnen, die hinsichtlich ihrer Funktion den Einlass-Klappen 14, 15 entsprechen.

Das Heiz-Abgas, das nachfolgend einfach als Abgas bezeichnet wird, wird aus den Herden 27 über ein Abgasleitungssystem 28 mit einem Abgas-Hauptrohr 29 und Abgas-Verteilerrohren 30 angeführt. Die Abgas-Verteilerrohre 30 stellen einen Heizgas-Auslass für die Backöfen 3, 4 dar. Das Abgas-Hauptrohr 29 mündet in einen vertikal angeordneten Kamin 31. Um das Abgas-Hauptrohr 29 herum ist ein Abgas-Wärmetauscher 32 angeordnet. Dieser wird von einem Wärmetauschermedium, beispielsweise von Wasser, durchflossen, welches dem Abgas-Wärmetauscher 32 über eine Wärmetauscher-Zuleitung 33 zugeführt wird und über eine Wärmetauscher-Ableitung 34 abgeführt wird. Die Eingangsseite der Wärmetauscher-Zuleitung 33 und die Ausgangsseite der Wärmerauscher-Ableitung 34 sind mit einem Kaltwasser-Wärmetauscher 35 verbunden. Über den Abgas-Wärmetauscher 32 und den Kaltwasser-Wärmetauscher 35 wird Abgaswärme an das der Dampfquelle 8 zugeführte Kaltwasser übertragen. Alternativ ist es möglich, wie in der Figur gestrichelt dargestellt ist, den Abgas-Wärmetauscher 32 über die Leitungen 33, 34 direkt mit dem Dampfkessel der Dampfquelle 8 zu verbinden und so die Wärme an das im Dampfkessel befindliche zu verdampfende Wasser zu übertragen.

Die den Herden 27 über das Dampf-Verteilersystem 24 zugeführten Schwaden werden über den Backöfen 3, 4 individuell zugeordnete Schwaden-Auslässe 36 in Form von mit den Backräumen der Herde 27 verbundenen Auslassstutzen abgeführt. Alternativ ist es möglich, die Schwaden-Auslässe 36 über ein Schwaden-Hauptrohr miteinander zu verbinden und dort wiederum einen Schwaden-Wärmetauscher anzuordnen, der die in den Schwaden enthaltene Restwärme wiederum zum Beispiel an den Kaltwasseranschluss 23 oder die Dampfquelle 8 weitergibt.

Über den Abgas-Wärmetauscher 32 oder den optionalen Schwaden-Wärmetauscher ist auch eine Wärmeabgabe an den sonstigen Verbraucher 5 oder an weitere Verbraucher möglich.

Die Backöfen 3, 4 werden direkt mit den von der Heizquelle 7 erzeugten Abgasen beheizt. Alternativ ist es möglich, zwischen der Heizquelle 7 und den Backöfen 3, 4 einen Heizgas-Wärmetauscher 37 anzuordnen, der in der Figur gestrichelt im Gasverteilersystem 11 angedeutet ist. In diesem Fall können die Backöfen 3, 4 als Umluft-Backöfen ausgeführt sein. Bis auf die Tatsache, dass einem derartigen Umluftbackofen dann eine eigene Heizenergieversorgung und eine eigene Dampfversorgung fehlt, sind, was den Umluft-Strömungsweg angeht, derartige Umluft-Backöfen bekannt, zum Beispiel aus der EP 1 197 148 A2. In diesem Fall wird die dem Beheizen der Herde dienende Umluft direkt durch die Backräume der Herde geleitet.

Die Backanlage 1 wird folgendermaßen betrieben: Je nach den Backerfordernissen werden aus der Gruppe der Backöfen 3, 4, zu der auch noch weitere Backöfen gehören können, diejenigen ausgewählt, die betrieben werden sollen. Die einzelnen Backöfen 3, 4 können auch unter Teillast gefahren werden, sodass von den fünf Herden 27 eines der Backöfen 3, 4 beispielsweise nur zwei Herde 27 benutzt werden. Abhängig von dem Heizleistungserfordernis wird die jeweilige Einlass-Klappe 14, 15 in eine Offenstellung oder in eine Verschlussstellung umgestellt.

Abhängig von der Stellung der Einlass-Klappen 14, 15 und abhängig vom Leistungsbedarf des sonstigen Verbrauchers 5 erfolgt dann eine Leistungsregelung der Heizquelle 7. Entsprechend erfolgt eine bedarfsweise Leistungsregelung der Dampfquelle 8 über die Dampf-Leistungsregeleinheit 22. Je nach dem Leistungsbedarf der Heizquelle 7 und der Dampfquelle 8 wird diesen Energie in Form des bei der Zentral-Versorgungseinrichtung 2 jeweils einsetzbaren Energieträgers zugeführt. Aufgrund der Wärmerückgewinnung über den Abgas-Wärmetauscher 32 und über den optionalen Schwaden-Wärmetauscher ist die Versorgung der Backöfen 3, 4 und des sonstigen Verbrauchers 5 mit Energie und, bei Bedarf, mit Dampf besonders effizient.

## Patentansprüche

1. Zentral-Versorgungseinrichtung (2) für eine Gruppe von Backöfen (3,4)
- mit einem Gehäuse (6),
- mit einer Heizquelle (7) und einer Dampfquelle (8), die in dem Gehäuse (6) untergebracht sind, und
- mit Anschlusskomponenten (9, 10) zum Verbinden der Quellen (7, 8) mit mindestens zwei Backöfen (3, 4).

2. Zentral-Versorgungseinrichtung nach Anspruch 1, **dadurch gekennzeichnet, dass** die Heizquelle (7) mit Öl, Kohle, Gas, elektrischer Energie oder Holz versorgt wird.

3. Zentral-Versorgungseinrichtung nach Anspruch 1, **dadurch gekennzeichnet, dass** die Heizquelle (7) mit alternativen Energiequellen versorgt wird.

4. Zentral-Versorgungseinrichtung nach einem der Ansprüche 1 bis 3, **gekennzeichnet durch** eine Heiz-Regeleinheit (20) zur Regelung der Leistung der Heizquelle (7).

5. Zentral-Versorgungseinrichtung nach einem der Ansprüche 1 bis 4, **gekennzeichnet durch** eine Dampf-Regeleinheit (22) zur Regelung der Leistung der Dampfquelle (8).

6. Backanlage (1)
- mit einer Zentral-Versorgungseinrichtung (2) nach einem der Ansprüche 1 bis 5 und
- mit mindestens zwei Backöfen (3, 4), die über die Zentral-Versorgungseinrichtung (2) mit Heizenergie und Schwaden versorgbar sind.

7. Backanlage nach Anspruch 6, **dadurch gekennzeichnet, dass** mindestens einer der Backöfen (3, 4) als mit Heizgas beheizter Ofen ausgeführt ist, wobei der Backofen (3, 4) einen Heizgas-Einlass (13) aufweist, der über eine der Anschlusskomponenten (9) und ein Verteilersystem (11) mit der Heizquelle (7) verbunden ist.

8. Backanlage nach Anspruch 7, **dadurch gekennzeichnet, dass** als Heizgas direkt von der Heizquelle (7) erzeugte Abgase genutzt sind, wobei jeder Backofen (3, 4) einen Heizgas-Auslass (30) aufweist, über den jeder Backofen (3, 4) mit einem Kamin (31) verbindbar ist.

9. Backanlage nach Anspruch 8, **gekennzeichnet durch** einen Abgas-Wärmetauscher (32), der im Strömungsweg (29) des Heizgases nach dem Heizgas-Auslass (30) angeordnet ist und über mindestens eine Wärmerückgewinnungsleitung (33, 34) mit der Zentral-Versorgungseinrichtung (2) in Wärmeverbindung steht.

10. Backanlage nach Anspruch 7, **dadurch gekennzeichnet dass** als Heizgas indirekt von der Heizquelle (7) erzeugte Umluft genutzt ist, wobei zwischen der Heizquelle (7) und dem Backofen (3, 4) ein Heizgas-Wärmetauscher (37) angeordnet ist.

11. Backanlage nach einem der Ansprüche 7 bis 10, **dadurch gekennzeichnet, dass** der Querschnitt einer Einlassöffnung des Heizgas-Einlasses (13) über eine steuerbare Einlass-Klappe (14, 15) verändert werden kann, die mit einer Steuereinheit (18) der Zentral-Versorgungseinrichtung (2) in Signalverbindung steht.

12. Backanlage nach Anspruch 11, **dadurch gekennzeichnet, dass** die Einlass-Klappe (14, 15) digital zwischen einer Offenstellung und einer Verschlussstellung umgestellt werden kann.

13. Backanlage nach Anspruch 11, **dadurch gekennzeichnet, dass** die Einlass-Klappe (14, 15) stufenlos verstellt werden kann.

14. Backanlage nach einem der Ansprüche 11 bis 13 unter Rückbeziehung auf Anspruch 4, **dadurch gekennzeichnet, dass** die Einlass-Klappe (14, 15) mit der Heiz-Regeleinheit (20) in Signalverbindung (16, 17) steht.

15. Backanlage nach einem der Ansprüche 6 bis 14, **dadurch gekennzeichnet, dass** jeder Backofen (3, 4) einen Schwaden-Auslass (36) aufweist, wobei ein Schwaden-Wärmetauscher, der im Strömungsweg der Schwaden nach dem Schwaden-Auslass (36) angeordnet ist, über eine Wärmerückgewinnungsleitung mit der Zentral-Versorgungseinrichtung (2) in Wärmeverbindung steht.
